(19) **Europäisches Patentamt**

**European Patent Office**

**Office européen des brevets**

(11) **EP 0 903 469 B1**

(12) **EUROPÄISCHE PATENTSCHRIFT**

(45) Veröffentlichungstag und Bekanntmachung des Hinweises auf die Patenterteilung:
**30.10.2002 Patentblatt 2002/44**

(51) Int Cl.⁷: **F01D 17/00**, H02P 9/04, F02D 29/06, F02D 31/00, F02C 9/56

(21) Anmeldenummer: **97810694.6**

(22) Anmeldetag: **22.09.1997**

(54) **Verfahren zur Regelung der Leistung einer Turbogruppe und Vorrichtung zur Durchführung des Verfahrens**

Method for controlling the power of a turbine plant and device for implementing the method

Procédé de régulation de la puissance d'un groupe à turbine et dispositif pour la réalisation du procédé

(84) Benannte Vertragsstaaten:
**BE DE GB NL**

(43) Veröffentlichungstag der Anmeldung:
**24.03.1999 Patentblatt 1999/12**

(73) Patentinhaber: **Alstom**
**75116 Paris (FR)**

(72) Erfinder:
• **Hepner, Stephan, Dr.**
**5628 Althäusern (CH)**
• **Scherrer, Hans-Kaspar**
**8057 Zürich (CH)**

(74) Vertreter: **Liebe, Rainer et al**
**ALSTOM (Switzerland) Ltd**
**Intellectual Property CHSP**
**Brown Boveri Str. 7/699/5**
**5401 Baden (CH)**

(56) Entgegenhaltungen:
EP-A- 0 742 356   WO-A-93/15311
DE-A- 3 422 210   DE-A- 19 516 799
US-A- 3 898 842   US-A- 4 242 592
US-A- 4 639 854

• DATABASE WPI Week 8541 Derwent Publications Ltd., London, GB; AN 85-255276 XP002056426 & SU 1 149 037 A (SOYUZTECHENERGO) , 7.April 1985
• DATABASE INSPEC INSTITUTE OF ELECTRICAL ENGINEERS, STEVENAGE, GB Inspec No. 244011, JASICKI Z: "Pulsations of power and parallel work equilibrium in power systems" XP002056425 & ARCHIWUM ELEKTROTECHNIKI, 1970, POLAND, Bd. 19, Nr. 4, ISSN 0004-0746, Seiten 697-713,
• TRIPATHY S C: "Dynamic simulation of hybrid wind-Diesel power generation system with superconducting magnetic energy storage" ENERGY CONVERSION AND MANAGEMENT, Bd. 38, Nr. 9, Juni 1997, Seite 919-930 XP004056698

## Beschreibung

TECHNISCHES GEBIET

Die vorliegende Erfindung bezieht sich auf das Gebiet der Kraftwerkstechnik. Sie betrifft ein Verfahren zur Regelung der Leistung einer thermische Leistung in elektrische Leistung umwandelnden Turbogruppe, welche Turbogruppe auf einer gemeinsamen Welle eine durch die thermische Leistung angetriebene Turbine und einen von der Turbine angetriebenen, elektrische Leistung an ein Netz abgebenden Generator umfasst, bei welchem Verfahren die von dem Generator abgegebene elektrische Leistung bestimmt und die thermische Leistung für die Turbine in Abhängigkeit von der gemessenen elektrischen Leistung geregelt wird.

Die Erfindung betrifft weiterhin eine Vorrichtung zur Durchführung des Verfahrens, umfassend einen Leistungsregler zur Regelung der thermischen Leistung für die Turbine, sowie erste Mittel, welche eine Ausgangsleistung der Turbogruppe mit einem vorgegebenen Leistungswert vergleichen und einen Differenzwert als Steuersignal an den Leistungsregler weitergeben.

STAND DER TECHNIK

Die übliche Art und Weise, die Ausgangsleistung einer Gasturbine zu regeln, besteht darin, die an den Ausgangsklemmen des zugehörigen Generators abgegebene elektrische Ausgangsleistung $P_G$ zu messen, den Messwert mit einem vorgegebenen Leistungswert (Sollwert) $P_C$ zu vergleichen und das resultierende Differenzsignal $\Delta P = P_G - P_C$ als Steuersignal an einen Leistungsregler weiterzugeben, der die thermische Leistung der Gasturbine regelt.

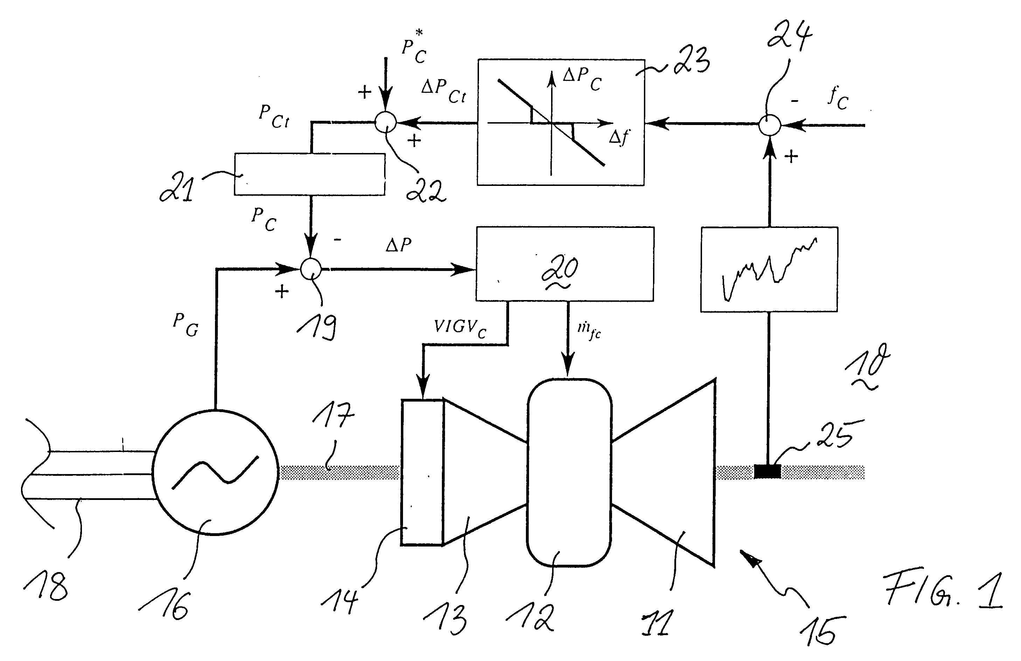

Ein beispielhaftes Schaltungsschema für eine solche bekannte Leistungsregelung ist in Fig. 1 wiedergegeben. Geregelt wird die Leistung einer aus einer Gasturbinenanlage 15 und einem Generator 16 bestehenden Turbogruppe 10. Die Gasturbinenanlage 15 umfasst die eigentliche Turbine 11, eine Brennkammer 12, einen Kompressor 13 und einen steuerbaren Einlass 14 für die Verbrennungsluft, der üblicherweise aus verstellbaren Einlass-Leitschaufeln (Variable Inlet Guiding Vanes VIGVs) besteht. Turbine 11 und Generator 16 sitzen auf einer gemeinsamen Welle 17, deren Drehfrequenz f mittels eines Drehfrequenzgebers 25 gemessen wird. Der Generator 16 gibt die erzeugte elektrische Leistung $P_G$ an ein Netz 18, in der Regel ein Drehstromnetz, ab. Die elektrische Leistung $P_G$ des Generators 16 wird in einem Subtrahierer 19 mit einem vorgegebenen Leistungswert $P_C$ verglichen und der Differenzwert $\Delta P$ einem Leistungsregler 20 zugeführt, der seinerseits über den steuerbaren Einlass 14 die Menge der dem Kompressor 13 zugeführten Verbrennungsluft, und den Massenfluss $dm_{fc}/dt$ des der Brennkammer 12 zugeführten Brennstoffes steuert.

Der vorgegebene Leistungswert (Sollwert) $P_C$ ergibt sich aus der Summe $P_{Ct} = P_C^* + \Delta P_{Ct}$ aus einem Referenz-Leistungswert $P_C^*$ und einem Korrekturwert $\Delta P_{Ct}$. Der Korrekturwert $\Delta P_{Ct}$ seinerseits stammt aus einem Kennliniengeber 23, der bei einer Abweichung der gemessenen Drehfrequenz f von einem Drehfrequenzsollwert $f_C$ nach Massgabe der in einem Subtrahierer 24 gebildeten Differenz $\Delta f$ und einer vorgegebenen Kennlinie $\Delta P_C = K(\Delta f)$ einen entsprechenden Korrekturwert ausgibt. Zusätzlich ist ein Anstiegsbegrenzer 21 vorgesehen, der die Aenderungsgeschwindigkeit des Regelsignals begrenzt.

Es hat sich nun herausgestellt, dass die in Fig. 1 dargestellte Regelschaltung zu einem möglicherweise gefährlichen Verhalten der Gasturbine führen kann, wenn starke (positive oder negative) Beschleunigungen der Welle auftreten. In diesem Fall ist die gemessene (elektrische) Ausgangsleistung $P_G$ Turbogruppe nicht länger ein Mass für die erzeugte thermische Leistung $P_T$ der Gasturbine 15, die durch die Masseströme der Verbrennungsluft und des Brennstoffes bestimmt ist, sondern enthält zusätzlich einen merklichen Anteil an kinetischer Leistung. Die resultierende Ungleichheit zwischen der gemessenen Ausgangsleistung und der erzeugten thermischen Leistung kann dazu führen, dass die Leistungsregelung (an sich ungerechtfertigte) Aenderungen in den Masseflüssen der Verbrennungsluft und des Brennstoffes einleitet, die für die Gasturbine selbst und/oder die Stabilität des angeschlossenen Netzes gefährlich sein können.

Oeffnet darüber hinaus der Generatorschalter, fällt die gemessene elektrische Leistung $P_G$ am Generator auf Null, da kein Leistungsfluss in das Netz stattfindet. Auch in diesem Fall resultiert eine Ungleichheit zwischen der gemessenen Ausgangsleistung und der erzeugten thermischen Leistung, und die Leistungsregelung erhält eine falsche Information über den thermischen Zustand der Gasturbine, die zu einem unerwünschten Verhalten des Leistungsreglers führt.

Die grundsätzliche Ursache für die genannten Probleme wird deutlich, wenn man die folgende Leistungsgleichung für den Rotor der Gasturbine aufstellt:

$$(1) \qquad P_G = P_T - P_{kin},$$

wobei $P_T$ die effektive thermische Ausgangsleistung der Gasturbine bedeutet und

$$(2) \qquad P_{kin} = 4\pi^2 \theta f(df/dt)$$

die kinetische Leistung der Welle ist, mit dem Trägheitsmoment $\theta$ der Welle, der Drehfrequenz f der Welle und der Drehfrequenzänderung (Beschleunigung) df/dt der Welle. Aus den Gleichungen (1) und (2) wird deutlich, dass die Messung der elektrischen Ausgangsleistung $P_G$ im allgemeinen nicht direkt ein Mass für die thermische Leistung an der Gasturbine ist, sondern ein Mass für die gesamte Leistung an der Welle ist, und die kinetische Leistung, die bei einer Abbremsung bzw. Beschleunigung der Welle abgegeben bzw. aufgenommen wird, einschliesst.

Daraus ergeben sich die folgenden unerwünschten Verhaltensmuster der Leistungsregelung:

1. Thermische Entlastung während eine Abgabe kinetischer Leistung

In diesem Fall wird der Rotor (die Welle) stark abgebremst. Dies geschieht typischerweise, wenn die Gasturbine mit einem Netz synchronisiert ist, das einem starken Abfall in der Frequenz unterliegt. Als Folge dieses Abfalls gibt der Rotor einen grossen Betrag an kinetischer Leistung ab, was zu einem plötzlichen Anstieg in der gemessenen Ausgangsleistung $P_G$ führt. Aendert sich der Sollwert $P_C$ nicht wesentlich, reduziert die Leistungsregelung die thermische Leistung $P_T$, um die gemessene Ausgangsleistung $P_G$ möglichst nahe am Sollwert $P_C$ zu halten. Dies ist jedoch genau die falsche Anwort des Regelsystems, weil ein Frequenzabfall im Netz ein Zeichen für einen erhöhten Leistungsbedarf ist. Vielmehr sollten Gasturbinen, die eine ausreichende Leistungsreserve haben, die thermische Leistung erhöhen statt zu reduzieren, um bei der Stabilisierung des Netzes zu helfen. Zusätzlich kann die thermische Entlastung der Gasturbine aufgrund der Abgabe kinetischer Leistung zu einem Flammenlöschen führen, der das bereits bestehende Leistungsdefizit des Netzes noch weiter verschärft. Dieses Verhalten gefährdet darum insgesamt ernsthaft die Netzstabilität.

2. Thermische Aufladung während eines Lastabwurfs

Betrachtet wird hier die Situation einer Gasturbine, die synchron zu einem stabilen Netz bei konstanter Geschwindigkeit und mit einer bestimmten Leistung (z.B. 160 MW thermischer Leistung) läuft. Da die Geschwindigkeit der Welle konstant ist (df/dt=0; $P_{kin}$=0), ist die gesamte gemessene elektrische Leistung $P_G$ gemäss Gleichung (1) identisch mit der thermischen Leistung $P_T$. Wenn nun der Generatorschalter öffnet, fällt die gemessene elektrische Ausgangsleistung $P_G$ auf Null. Folglich erhält der Leistungsregler ein für 0 MW Ausgangsleistung representatives Signal, obwohl die thermische Leistung tatsächlich unverändert (im Beispiel 160 MW) ist. Der Leistungsregler wird dadurch fälschlicherweise veranlasst, die thermische Leistung um einen Betrag zu erhöhen, der durch den Leistungs-Sollwert gefordert wird. Theoretisch kann sich dadurch die thermische Leistung auf das Zweifache des Leistungs-Sollwertes $P_C$ erhöhen. Sobald der Generatorschalter öffnet, wird der Rotor durch die thermische Leistung $P_T$ beschleunigt. Der Abfall des Signals $P_G$ und die daraus resultierende erhöhte thermische Leistung der Gasturbine wird die Beschleunigung der Welle noch erhöhen, so dass die Welle möglicherweise einen Grenzbereich der Geschwindigkeit erreicht.

EP 0742356 A2 beschreibt ein Verfahren zur Einstellung einer Hauptregelgrösse beim Betrieb einer Gasturbogruppe. Als Hauptregelgrösse können nach dieser Lösung beispielsweise die Generatorleistung oder die Drehfrequenz des Rotors dienen. Ein Sollwert der gewählten Hauptregelgrösse wird mit einem Messwert der Hauptregelgrösse verglichen, und eine benötigte Hauptregeldifferenz wird hierarchisch über ein Management auf mindestens eine Kaskade verteilt. Bei einer Gasturbogruppe mit sequentieller Verbrennung kann dabei mittels des Managements vorzugsweise so vorgegangen werden, dass zunächst das Potential einer ersten Leistungs-Temperatur-Kaskade, welche den Brennstoffmassenstrom in die erste Brennkammer einstellt, bis zum Erreichen einer maximalen Turbineneintrittstemperatur ausgeschöpft wird, und danach das Potential einer zweiten Leistungs-Temperatur-Kaskade für die zweite Brennkammer ausgeschöpft wird und danach dasjenige der Leistungs-Druck-Kaskade. Durch die Verteilung der Hauptregeldifferenz auf voneinander unabhängige Kaskaden wird eine gegenseitige Wechselwirkung der Kaskaden ausgeschlossen. Durch die Reihenschaltung von Hauptregelgrössen-Regler und Grössenregler innerhalb der Kaskaden ist der Grössenregler stets ansprechbereit. Dies macht die Regelung schnell und sicher im Hinblick auf das Ausschliessen wechselseitiger Einflussnahmen. Dennoch können bei einer Beschränkung auf die erwähnten Hauptregelgrössen Leistung und Drehfrequenz die vorgenannten Nachteile nicht zuverlässig ausgeschlossen werden.

Ein Verfahren zum Schutz einer Turbomaschine vor einer gefährlichen Erhöhung der Rotorfrequenz während eines Lastabwurfs ist in SU 1149037 A anhand des Betriebs einer Dampfturbinenanlage beschrieben. Dieses Verfahren beruht auf drei Ausgangsgrössen, der gemessenen elektrischen Generatorleistung $N_3$, der Drehfrequenz n des Rotors und der effektiven mechanischen Turbinenleistung $N_T$, welche indirekt anhand der gemessenen Druckparameter $p_1$; $p_2$; $p_3$ des Prozessdampfs und nicht näher erläuterter Koeffizienten $K_1$; $K_2$; $K_3$ in einem Addierer (1) rechnerisch ermittelt wird. Aus der mechanischen Turbinenleistung $N_T$ und der Generatorleistung $N_3$ wird im Subtrahierer (3) nach Massgabe der Gleichung $N_T-N_3=I\cdot dn/dt$, worin I das Trägheitsmoment der Drehmasse des Rotors und dn/dt dessen Beschleunigung symbolisieren, die kinetische Leistung $I\cdot dn/dt$ des umlaufenden Rotors errechnet. Ein Addierer (6) verknüpft die der Drehfrequenz und der kinetischen Leistung entsprechenden Signale. Sobald die Summe dieser Signale einen vorgegebenen Grenzwert überschreitet (Vergleicher (7)), wird von Impulsformer (8) ein Warnsignal an den Logikbaustein (12) ausgegeben.

In einer zweiten, davon unabhängigen Kaskade wird die Generatorleistung $N_3$ über Vergleicher (9) und (10) geführt. Sobald $N_3$ über einen vorgegebenen Zeitraum hinweg einen Sollwert unterschreitet, insbesondere auf Null fällt, gibt Impulsformer (11) ein Warnsignal an den Logikbaustein (12) aus.

Gehen gleichzeitig aus beiden Kaskaden Warnsignale am Logikbaustein (12) ein, so wird ein Schutzsignal ausgelöst, welches die Absperrung der Dampfzufuhr zur Turbine veranlasst.

Dieses Verfahren ist nicht als eine Leistungsregelung einer Turbogruppe konzipiert, sondern als ein Verfahren zum Schutz von Turbogruppen vor einer mechanischen Überbeanspruchung während eines Lastabwurfs. Durch Ermittlung der Parameter Rotorfrequenz und elektrische Generatorleistung sowie Berechnung der kinetischen Rotorleistung sollen Gefahrensituationen durch mechanische Überbeanspruchung sicher erkannt und durch Sperrung der Leistungszufuhr zur Turbine rechtzeitig unterbunden werden.

DARSTELLUNG DER ERFINDUNG

Es ist nun Aufgabe der Erfindung, ein Verfahren zur Leistungsregelung einer Turbogruppe zu schaffen, welche die beschriebenen Nachteile vermeidet und die thermische Leistung so regelt, dass sowohl eine Instabilität des Netzes durch die Turbogruppe wie auch eine Ueberlastung der Turbogruppe sicher vermieden werden.

Die Aufgabe wird bei einem Verfahren der eingangs genannten Art dadurch gelöst, dass die thermische Leistung der Turbine aus der vom Generator abgegebenen elektrischen Leistung $P_G$ und der kinetischen Leistung der Welle dergestalt geregelt wird, dass neben der elektrischen Leistung $P_G$ die Drehfrequenz f der Welle ermittelt wird, und aus der Drehfrequenz f und der zeitlichen Änderung df/dt der Drehfrequenz f nach Massgabe der Gleichung $P_{kin} = 4\pi^2 \cdot \theta \cdot f \cdot df/dt$ (worin θ das Trägheitsmoment der Drehmasse symbolisiert) die kinetische Leistung $P_{kin}$ der Welle bestimmt wird, die kinetische Leistung $P_{kin}$ der elektrischen Leistung $P_G$ aufaddiert wird, und die Summe aus der elektrischen Leistung $P_G$ und der kinetischen Leistung $P_{kin}$ mit einem vorgegebenen Leistungswert $P_C$ verglichen wird, und der dabei ermittelte Differenzwert ∆P an einen Leistungsregler (20) zur Regelung der thermischen Leistung $P_T$ der Turbine (11) weitergegeben wird.

Durch die Einbeziehung der elektrischen Leistung des Generators und der kinetischen Leistung der Welle in die Leistungsregelung kann ein unerwünschtes Fehlverhalten der Regelung, insbesondere in den Fällen eines Lastabwurfs und einer Instabilität des Netzes, sicher vermieden werden. Dabei ist es möglich, mit einem einzigen Drehfrequenzgeber an der Welle auf einfache Weise die kinetische Leistung der Welle zu jedem Zeitpunkt sicher und genau zu bestimmen.

Grundsätzlich kann die elektrische Leistung an den Klemmen des Generators gemessen werden. Eine andere, vom Generator unabhängige Art der Messung ist gemäss einem zweiten bevorzugten Ausführungsbeispiel der Erfindung dadurch gekennzeichnet, dass zur Bestimmung der vom Generator abgegebenen elektrischen Leistung die Drehfrequenz der Welle und das an der Welle angreifende Drehmoment gemessen und aus diesen Grössen die elektrische Leistung berechnet wird.

In die Bestimmung der kinetischen Leistung der Welle geht das Trägheitsmoment θ der Welle ein. Prinzipiell kann das Trägheitsmoment berechnet oder auch experimentell bestimmt werden. Ein besonders einfaches Verfahren zur Bestimmung ergibt sich, wenn gemäss einer weiteren bevorzugten Ausführungsform der Erfindung zur Festlegung des für die Regelung massgeblichen Trägheitsmoments θ der Welle bei einem stationären Betrieb der Turbogruppe zu einem Zeitpunkt die elektrische Leistung durch ein Trennen des Generators vom Netz auf Null gesetzt und die zu diesem Zeitpunkt vorhandene Drehfrequenz und Drehbeschleunigung der Welle gemessen wird, und wenn der Wert für das Trägheitsmoment θ der Welle so gewählt wird, dass die nach der Formel $P_{kin} = 4\pi^2\theta f(df/dt)$ berechnete kinetische Leistung $P_{kin}$ gleich der gemessenen elektrischen Leistung $P_G$ zum Zeitpunkt des Trennens ist.

Eine erfindungsgemässe Vorrichtung zur Durchführung des Verfahrens zur Regelung der Leistung einer thermische Leistung in elektrische Leistung umwandelnden Turbogruppe, welche Turbogruppe mindestens auf einer gemeinsamen Welle eine durch die thermische Leistung angetriebene Turbine und einen von der Turbine angetriebenen, elektrische Leistung $P_G$ an ein Netz abgebenden Generator und einen Leistungsregler zur Regelung der thermischen Leistung für die Turbine umfasst, zeichnet sich aus durch erste Mittel, welche eine Ausgangsleistung der Turbogruppe mit einem vorgegebenen Leistungswert $P_C$ vergleichen und einen Differenzwert ∆P als Steuersignal an den Leistungsregler zur Regelung der thermischen Leistung $P_T$ für die Turbine weitergeben, zweite Mittel zur Messung der Drehfrequenz f der Welle, dritte Mittel, welche aus der gemessenen Drehfrequenz f und der zeitlichen Aenderung df/dt der Drehfrequenz f nach Massgabe der Gleichung $P_{kin} = 4\pi^2 \cdot \theta \cdot f \cdot (df/dt)$ (worin θ das Trägheitsmoment der Drehmasse (17) symbolisiert) die kinetische Leistung der Welle (17) bestimmen, und vierte Mittel (30), welche die vom Generator (16) abgegebene elektrische Leistung ($P_G$) und die von den dritten Mitteln (26,..,29) bestimmte kinetische Leistung $P_{kin}$ addieren und als Ausgangsleistung der Turbogruppe (10) an die ersten Mittel (19) weiterleiten.

Eine bevorzugte Ausführungsform der Vorrichtung nach der Erfindung zeichnet sich dadurch aus, dass die dritten Mittel ein Differenzierglied, einen Multiplizierer und einen Verstärker mit einem einstellbaren Verstärkungsfaktor umfassen.

Erfindungsgemäss angewendet wird das Verfahren auf eine Turbogruppe, die eine Dampfturbine oder eine Gasturbine umfasst, oder auf ein Kombikraftwerk, welches eine Gasturbine und eine hinter die Gasturbine geschaltete Dampfturbine umfasst.

Weitere Ausführungsformen der Erfindung ergeben sich aus den abhängigen Ansprüchen.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1     ein schematisiertes Schaltbild einer Leistungsregelung für eine Gasturbine nach dem Stand der Technik; und

Fig. 2     das zu Fig. 1 analoge Schaltbild mit zusätzlicher Berücksichtigung der kinetischen Leistung der Welle gemäss einem bevorzugten Ausführungsbeispiel der Erfindung.

WEGE ZUR AUSFÜHRUNG DER ERFINDUNG

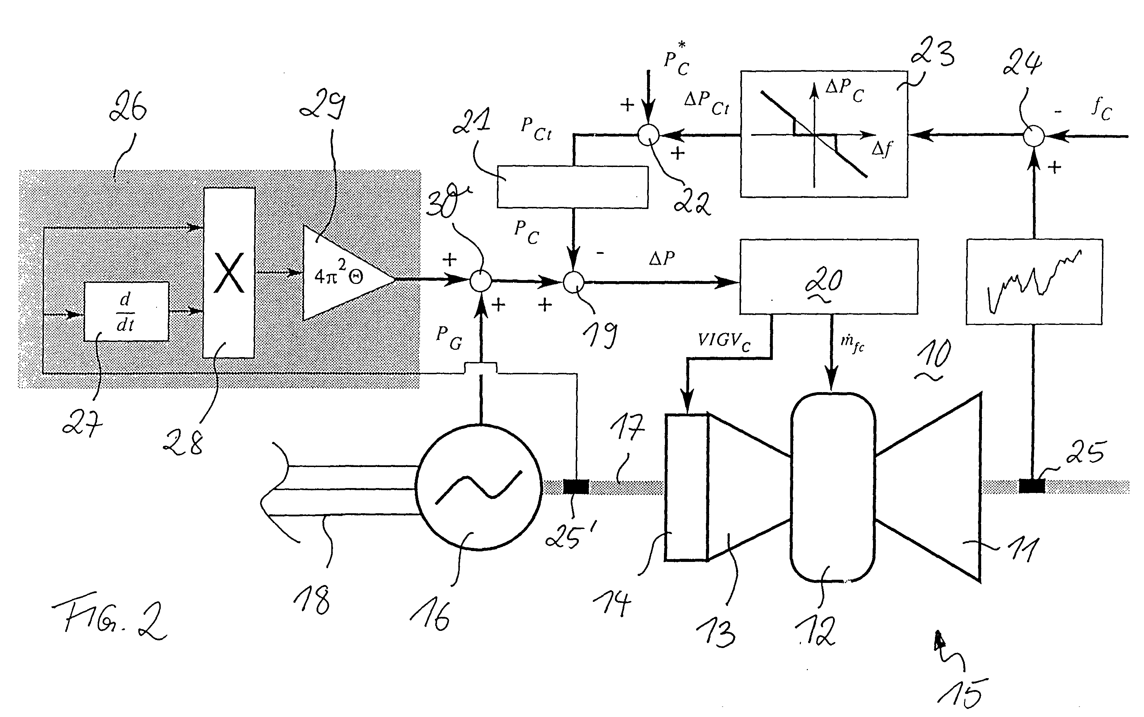

In Fig. 2 ist in einem zu Fig. 1 analogen schematisierten Schaltbild eine Leistungsregelung für eine Gasturbine 15 dargestellt, der ein bevorzugtes Ausführungsbeispiel des Verfahrens nach der Erfindung zugrundeliegt. Die Gasturbinenanlage 15 mit ihren Teilen 11,..,14, die Welle 17, der auf ein Netz 18 geschaltete Generator 16, und die aus den Elementen 19,..,25 gebildete Regelschleife sind im wesentlichen dieselben, wie in Fig. 1, und daher auch mit denselben Bezugszeichen versehen. Eine Aenderung gegenüber Fig. 1 ergibt sich dahingehend, dass die gemessene elektrische Leistung $P_G$ vom Generator 16 nicht direkt am Subtrahierer 19 mit dem vorgegebenen Leistungs-Sollwert $P_C$ verglichen wird, sondern dass zu der elektrischen Leistung $P_G$ zunächst in einem Addierer 30 die kinetische Leistung $P_{kin}$ hinzuaddiert wird.

Die kinetische Leistung $P_{kin}$ wird in einer Korrekturschaltung 26 aus der an der Welle 17 gemessenen Drehfrequenz f der Welle 17 nach Massgabe der Gleichung (2) berechnet. Dazu wird die gemessene Drehfrequenz f auf einen Eingang eines mit zwei Eingängen versehenen Multiplizierers 28 gegeben. Auf den anderen Eingang des Multiplizierers 28 wird die zeitliche Aenderung df/dt der Drehfrequenz f gegeben, die aus der gemessenen Drehfrequenz f durch Differentiation in einem Differenzierglied 27 abgeleitet wird. Das im Multiplizierer 28 errechnete Produkt aus den Grössen f und df/dt wird dann in einem Verstärker 29 verstärkt, der den Verstärkungsfaktor $4\pi^2\theta$ aufweist. Am Ausgang des Verstärkers 29, der zugleich den Ausgang der Korrekturschaltung 26 bildet, steht dann die Grösse $P_{kin}$ an, die an den Addierer 30 weitergeleitet wird. Die Korrekturschaltung 26 des Ausführungsbeispiels stellt eine analoge Rechenschaltung dar, die aus der gemessenen Drehfrequenz f die gewünschte kinetische Leistung $P_{kin}$ berechnet. Selbstverständlich kann diese Berechnung aber auch digital mittels eines Mikroprozessors oder dgl. erfolgen, wenn die Eingangsgrössen vorher entsprechend digitalisiert werden. Die Messung der Drehfrequenz f geschieht in Fig. 2 der Einfachheit halber mittels eines separaten Drehfrequenzgebers 25'. Selbstverständlich kann auf diesen separaten Drehfrequenzgeber 25' verzichtet und das Ausgangssignal des Drehfrequenzgebers 25 für die Berechnung der kinetischen Leistung verwendet werden.

Wie bereits erwähnt, wird die im Addierer 30 gebildete Summe aus der elektrischen Leistung $P_G$ und der kinetischen Leistung $P_{kin}$ im Subtrahierer 19 mit einem vorgegebenen Leistungswert $P_C$ verglichen und die thermische Leistung $P_T$ verringert, wenn der Differenzwert $\Delta P$ positiv ist, bzw. erhöht, wenn der Differenzwert $\Delta P$ negativ ist. Wenn eine Gasturbinenanlage 15 geregelt wird, die einen steuerbaren Einlass 14 für die Verbrennungsluft, einen Kompressor 13 zur Verdichtung der Verbrennungsluft, eine Brennkammer 12 zur Verbrennung eines Brennstoffes unter Zufuhr der Verbrennungsluft, und eine Turbine 11 umfasst, werden zur Regelung der thermischen Leistung $P_T$ der Massenstrom der eingelassenen Verbrennungsluft über den steuerbaren Einlass 14, und der Massenstrom des Brennstoffes $dm_{fc}/dt$ geregelt.

In der Anordnung nach Fig. 2 wird die elektrische Leistung $P_G$ für die Leistungsregelung direkt an den Ausgangsklemmen des Generators 16 abgenommen. Soll auf eine solche Messung am Generator 16 verzichtet werden, kann zur Bestimmung der vom Generator 16 abgegebenen elektrischen Leistung $P_G$ die Drehfrequenz f der Welle 17 und das an der Welle 17 angreifende Drehmoment gemessen und aus diesen Grössen die elektrische Leistung $P_G$ berechnet werden. Hierdurch können beispielsweise Isolationsprobleme auf der Generatorseite vermieden werden.

Für die Berechnung der kinetischen Leistung ist an sich die Kenntnis des Trägheitsmoments $\theta$ der Welle 17 notwendig, damit z.B. der Verstärkungsfaktor des Verstärkers 29 entsprechend eingestellt werden kann. Es ist in diesem Zusammenhang eine experimentelle Bestimmung von $\theta$ zweckmässig. Dazu wird bei einem stationären Betrieb der Turbogruppe 10 zu einem Zeitpunkt die elektrische Leistung $P_G$ durch ein Trennen des Generators 16 vom Netz 18 auf Null gesetzt. Die zu diesem Zeitpunkt vorhandene Drehfrequenz f und Drehbeschleunigung df/dt der Welle 17 werden gemessen und z.B. in die Korrekturschaltung 26 eingegeben. Der Wert für das Trägheitsmoment $\theta$ der Welle 17 bzw. der Verstärkungsfaktor des Verstärkers 29 werden nun so gewählt, dass die nach der Formel $P_{kin} = 4\pi^2\theta f(df/dt)$ berechnete kinetische Leistung $P_{kin}$ bzw. das Ausgangssignal des Verstärkers 29 gleich der gemessenen elektrischen Leistung $P_G$ zum Zeitpunkt des Trennens ist, die im übrigen (wegen des zu diesem Zeitpunkt herrschenden stationären Zustands) gleich der thermischen Leistung $P_T$ zu diesem Zeitpunkt ist.

Diese Art der Bestimmung hat ihren Hintergrund darin, dass bei Wegfall der elektrischen Leistung $P_G$ in einem stationären Zustand (kinetische Leistung $P_{kin}=0$) die gesamte thermische Leistung in kinetische Leistung umgesetzt wird, was zu einer Beschleunigung der Welle (df/dt > 0) führt. Die aus der einsetzenden Beschleunigung bestimmbare kinetische Leistung der Welle 17 kann daher direkt der thermischen Leistung zum Trennungszeitpunkt bzw. der elektrischen Leistung gleichgesetzt werden, d.h. $P_T=P_G= P_{kin}=4\pi^2\theta f(df/dt)$. Da $P_T$ bzw. $P_G$ sowie f und df/dt bekannt sind, lässt sich daraus das Trägheitsmoment $\theta$ ermitteln.

Das beschriebene Regelungsverfahren lässt sich bei einzelnen Turbogruppen oder auch bei einer Kombination von mehreren von Turbogruppen anwenden. Die Turbine kann dabei - wie im erläuterten Beispiel - eine Gasturbine sein. Sie kann aber auch eine Dampfturbine sein. Insbesondere lässt sich das erfindungsgemässe Verfahren anwenden in Kombikraftwerken, welche wenigstens eine Gasturbine und wenigstens eine hinter die Gasturbine geschaltete Dampfturbine umfassen.

BEZEICHNUNGSLISTE

| | |
|---|---|
| 10 | Turbogruppe |
| 11 | Turbine |
| 12 | Brennkammer |
| 13 | Kompressor |
| 14 | steuerbarer Einlass (Variable Inlet Guiding Vane (VIGV)) |
| 15 | Gasturbinenanlage |
| 16 | Generator |
| 17 | Welle |
| 18 | Netz (Drehstromnetz) |
| 19,24 | Subtrahierer |
| 20 | Leistungsregler |
| 21 | Anstiegsbegrenzer |
| 22,30 | Addierer |
| 23 | Kennliniengeber |
| 25,25' | Drehfrequenzgeber |
| 26 | Korrekturschaltung |
| 27 | Differenzierglied |
| 28 | Multiplizierer |
| 29 | Verstärker |

**Patentansprüche**

1.  Verfahren zur Regelung der Leistung einer thermische Leistung in elektrische Leistung umwandelnden Turbogruppe (10), welche Turbogruppe (10) auf einer gemeinsamen Welle (17) eine durch die thermische Leistung angetriebene Turbine (11) und einen von der Turbine (11) angetriebenen, elektrische Leistung $P_G$ an ein Netz (18) abgebenden Generator (16) umfasst, bei welchem Verfahren die von dem Generator (16) abgegebene elektrische Leistung $P_G$ und die von der Welle (17) aufgenommene bzw. abgegebene kinetische Leistung $P_{kin}$ bestimmt werden und die thermische Leistung $P_T$ für die Turbine (11) in Abhängigkeit von der elektrischen Leistung $P_G$ und der kinetischen Leistung $P_{kin}$ geregelt wird, **dadurch gekennzeichnet, dass** die elektrische Leistung $P_G$ und die Drehfrequenz f der Welle (17) ermittelt werden, aus der Drehfrequenz f und der zeitlichen Änderung df/dt der Drehfrequenz f nach Massgabe der Gleichung $P_{kin} = 4\pi^2\cdot\theta\cdot f\cdot df/dt$ (worin $\theta$ das Trägheitsmoment der Drehmasse symbolisiert) die kinetische Leistung $P_{kin}$ der Welle (17) bestimmt wird, die kinetische Leistung $P_{kin}$ der Welle (17) und die elektrische Leistung $P_G$ addiert werden, und die Summe aus der elektrischen Leistung $P_G$ und der kinetischen Leistung $P_{kin}$ mit einem vorgegebenen Leistungswert $P_C$ verglichen wird, und der ermittelte Differenzwert $\Delta P$ an einen Leistungsregler (20) zur Regelung der thermischen Leistung $P_T$ der Turbine (11) weitergegeben wird.

2.  Verfahren nach Anspruch 1, **dadurch gekennzeichnet, dass** die thermische Leistung $P_T$ verringert wird, wenn der ermittelte Differenzwert $\Delta P$ positiv ist, und sie erhöht wird, wenn der ermittelte Differenzwert $\Delta P$ negativ ist.

3.  Verfahren nach Anspruch 1, **dadurch gekennzeichnet, dass** die Turbine (11) Teil einer Gasturbinenanlage (15) ist, welche Gasturbinenanlage (15) einen steuerbaren Einlass (14) für die Verbrennungsluft, einen Kompressor (13) zur Verdichtung der Verbrennungsluft, eine Brennkammer (12) zur Verbrennung eines Brennstoffes unter Zufuhr der Verbrennungsluft und die Turbine (11) umfasst, und dass zur Regelung der thermischen Leistung $P_T$ der Massenstrom der eingelassenen Verbrennungsluft über den steuerbaren Einlass (14), und der Massenstrom des Brennstoffes $dm_{fc}/dt$ geregelt werden.

4.  Verfahren nach Anspruch 1, **dadurch gekennzeichnet, dass** zur Bestimmung der vom Generator (16) abgegebenen elektrischen Leistung $P_G$ die Drehfrequenz f der Welle (17) und das an der Welle (17) angreifende Drehmoment gemessen werden und aus diesen Grössen die elektrische Leistung $P_G$ berechnet wird.

5.  Verfahren nach Anspruch 4, **dadurch gekennzeichnet, dass** zur Festlegung des für die Regelung massgeblichen Trägheitsmoments $\theta$ der Welle (17) bei einem stationären Betrieb der Turbogruppe (10) zu einem Zeitpunkt die elektrische Leistung $P_G$ durch ein Trennen des Generators (16) vom Netz (18) auf Null gesetzt und die zu diesem Zeitpunkt vorhandene Drehfrequenz f und die Drehbeschleunigung df/dt der Welle (17) gemessen werden, und dass der Wert für das Trägheitsmoment $\theta$ der Welle (17) so gewählt wird, dass die nach der Formel $P_{kin}$ = $4\pi^2 \cdot \theta \cdot f \cdot (df/dt)$ berechnete kinetische Leistung $P_{kin}$ gleich der gemessenen elektrischen Leistung $P_G$ zum Zeitpunkt des Trennens ist.

6.  Vorrichtung zur Durchführung des Verfahrens nach zur Regelung der Leistung einer thermische Leistung in elektrische Leistung umwandelnden Turbogruppe (10), welche Turbogruppe (10) auf einer gemeinsamen Welle (17) eine durch die thermische Leistung angetriebene Turbine (11) und einen von der Turbine (11) angetriebenen, elektrische Leistung $P_G$ an ein Netz (18) abgebenden Generator (16) sowie einen Leistungsregler (20) zur Regelung der thermischen Leistung $P_T$ für die Turbine (11) umfasst, **gekennzeichnet durch** erste Mittel (19), welche eine Ausgangsleistung der Turbogruppe (10) mit einem vorgegebenen Leistungswert $P_C$ vergleichen und einen Differenzwert $\Delta P$ als Steuersignal an den Leistungsregler (20) zur Regelung der thermischen Leistung $P_T$ für die Turbine (11) weitergeben, zweite Mittel (25, 25') zur Messung der Drehfrequenz f der Welle (17), dritte Mittel (26,..,29), welche aus der gemessenen Drehfrequenz f und der zeitlichen Aenderung df/dt der Drehfrequenz f nach Massgabe der Gleichung $P_{kin}$ = $4\pi^2 \cdot \theta \cdot f \cdot (df/dt)$ (worin $\theta$ das Trägheitsmoment der Drehmasse (17) symbolisiert) die kinetische Leistung der Welle (17) bestimmen, und vierte Mittel (30), welche die vom Generator (16) abgegebene elektrische Leistung ($P_G$) und die von den dritten Mitteln (26,..,29) bestimmte kinetische Leistung $P_{kin}$ addieren und als Ausgangsleistung der Turbogruppe (10) an die ersten Mittel (19) weiterleiten.

7.  Vorrichtung nach Anspruch 6, **dadurch gekennzeichnet, dass** die dritten Mittel ein Differenzierglied (27), einen Multiplizierer (28) und einen Verstärker (29) mit einem einstellbaren Verstärkungsfaktor umfassen.

8.  Vorrichtung nach Anspruch 6 oder 7, **dadurch gekennzeichnet, dass** die ersten Mittel einen Subtrahierer (19), die zweiten Mittel einen Drehfrequenzgeber (25, 25') und die vierten Mittel einen Addierer (30) umfassen.

## Claims

1.  Method for regulating the power of a turbo set (10) converting thermal power into electric power, said turbo set (10) comprising, on a common shaft (17), a turbine (11) driven by the thermal power and a generator (16) driven by the turbine (11) and delivering electric power $P_G$ to a network (18), in which method the electric power $P_G$ delivered by the generator (16) and the kinetic power $P_{kin}$ received or transmitted by the shaft (17) are determined and the thermal power $P_T$ for the turbine (11) is regulated as a function of the electric power $P_G$ and of the kinetic power $P_{kin}$, **characterized in that** the electric power $P_G$ and the rotary frequency f of the shaft (17) are determined, the kinetic power $P_{kin}$ of the shaft (17) is determined from the rotary frequency f and the time change df/dt of the rotary frequency f according to the equation $P_{kin}$ = $4\pi^2 \cdot \theta \cdot f \cdot df/dt$ (in which $\theta$ symbolizes the moment of inertia of the rotary mass), the kinetic power $P_{kin}$ of the shaft (17) and the electric power $P_G$ are added, and the sum of the electric power $P_G$ and of the kinetic power $P_{kin}$ is compared with a predetermined power value $P_C$, and the differential value $\Delta P$ determined is transferred to a power controller (20) for regulating the thermal power $P_T$ of the turbine (11) .

2.  Method according to Claim 1, **characterized in that** the thermal power $P_T$ is reduced, when the differential value $\Delta P$ determined is positive, and it is increased, when the differential value $\Delta P$ determined is negative.

3.  Method according to Claim 1, **characterized in that** the turbine (11) is part of a gas turbine system (15), said gas turbine system (15) comprising a controllable inlet (14) for the combustion air, a compressor (13) for compressing the combustion air, a combustion chamber (12) for the combustion of a fuel, with the combustion air being supplied, and the turbine (11), and **in that** the mass flow of admitted combustion air via the controllable inlet (14) and the mass flow of fuel $dm_{fc}/dt$ are regulated in order to regulate the thermal power $P_T$.

4.  Method according to Claim 1, **characterized in that**, in order to determine the electric power $P_G$ delivered by the generator (16), the rotary frequency f of the shaft (17) and the torque exerted on the shaft (17) are measured and the electric power $P_G$ is calculated from these variables.

5.  Method according to Claim 4, **characterized in that**, in order to fix the moment of inertia $\theta$ of the shaft (17), which is critical for regulation, the electric power $P_G$ is set to zero at one moment by isolating the generator (16) from the network (18) in a steady-state mode of the turbo set (10), and the rotary frequency f and angular acceleration df/dt of the shaft (17), which occur at this moment, are measured, and **in that** the value for the moment of inertia $\theta$ of the shaft (17) is selected in such a way that the kinetic power ($P_{kin}$), calculated according to the formula $P_{kin}$ = $4\pi^2 \cdot \theta \cdot f \cdot (df/dt)$, is equal to the measured electric power $P_G$ at the moment of isolation.

6. Device for carrying out the method for regulating the power of a turbo set (10) converting thermal power into electric power, which turbo set (10) comprises, on a common shaft (17), a turbine (11) driven by the thermal power and a generator (16) driven by the turbine (11) and transmitting electrical power $P_G$ to a network (18), **characterized by** first means (19) which compare an output power of the turbo set (10) with a predetermined power value $P_C$ and which transmit a differential value $\Delta P$ as a control signal to the power regulator (20) for regulating the thermal power $P_T$ for the turbine (11), second means (25, 25') for measuring the rotary frequency f of the shaft (17), third means (26, .., 29), which determine the kinetic power of the shaft (17) from the measured rotary frequency f and the change in time df/dt of the rotary frequency f in accordance with the equation $P_{kin} = 4\pi^2 \cdot \theta \cdot f \cdot (df/dt)$ (in which $\theta$ symbolizes the moment of inertia of the rotary mass (17)), and fourth means (30), which add the electric power ($P_G$) delivered by the generator (16) and the kinetic power $P_{kin}$ determined by the third means (26, .., 29) and which transmit the same as the output power of the turbo set (10) to the first means (19).

7. Device according to Claim 6, **characterized in that** the third means comprise a differentiating element (27), a multiplier (28) and an amplifier (29) with an adjustable gain.

8. Device according to Claim 6 or 7, **characterized in that** the first means comprise a subtractor (19), the second means a rotary frequency encoder (25, 25') and the fourth means an adder (30).

**Revendications**

1. Procédé de régulation de la puissance d'un groupe à turbine (10) convertissant une puissance thermique en une puissance électrique, groupe à turbine (10) qui comprend, sur un arbre commun (17), une turbine (11) entraînée par la puissance thermique et un générateur (16) entraîné par la turbine (11) et fournissant une puissance électrique $P_G$ à un réseau (18), procédé dans lequel on détermine la puissance électrique $P_G$ fournie par le générateur (16) et la puissance cinétique $P_{cin}$ absorbée, respectivement fournie par l'arbre (17) et on régule la puissance thermique $P_T$ pour la turbine (11) en fonction de la puissance électrique $P_G$ et de la puissance cinétique $P_{cin}$, **caractérisé en ce que** l'on détecte la puissance électrique $P_G$ et la fréquence de rotation f de l'arbre (17), on détermine la puissance cinétique $P_{cin}$ de l'arbre (17) à partir de la fréquence de rotation f et de la variation temporelle df/dt de la fréquence de rotation f selon l'équation $P_{cin} = 4\pi^2 \cdot \theta \cdot f \cdot df/dt$ (dans laquelle $\theta$ symbolise le moment d'inertie de la masse en rotation), on additionne la puissance cinétique $P_{cin}$ de l'arbre (17) et la puissance électrique $P_G$, on compare la somme de la puissance électrique $P_G$ et de la puissance cinétique $P_{cin}$ avec une valeur de puissance prédéterminée $P_C$, et on transmet la valeur différentielle détectée $\Delta P$ à un régulateur de puissance (20) en vue de la régulation de la puissance thermique $P_T$ de la turbine (11).

2. Procédé suivant la revendication 1, **caractérisé en ce que** l'on réduit la puissance thermique $P_T$ lorsque la valeur différentielle détectée $\Delta P$ est positive, et on l'augmente lorsque la valeur différentielle $\Delta P$ est négative.

3. Procédé suivant la revendication 1, **caractérisé en ce que** la turbine (11) fait partie d'une installation de turbine à gaz (15), installation de turbine à gaz (15) qui comprend une entrée réglable (14) pour l'air de combustion, un compresseur (13) pour la compression de l'air de combustion, une chambre de combustion (12) pour la combustion d'un combustible avec apport de l'air de combustion et la turbine (11), et **en ce que**, pour la régulation de la puissance thermique $P_T$, on régule le courant massique de l'air de combustion entrant au moyen de l'entrée réglable (14) et le courant massique de combustible $dm_{fc}/dt$.

4. Procédé suivant la revendication 1, **caractérisé en ce que**, pour la détermination de la puissance électrique $P_G$ fournie par le générateur (16), on mesure la fréquence de rotation f de l'arbre (17) et le couple de rotation attaquant l'arbre (17) et on calcule la puissance électrique $P_G$ à partir de ces grandeurs.

5. Procédé suivant la revendication 4, **caractérisé en ce que**, pour la fixation du moment d'inertie $\theta$ de l'arbre (17) déterminant pour la régulation, on amène la puissance électrique $P_G$ à zéro en séparant le générateur (16) du réseau (18) à un instant donné dans un domaine stationnaire du groupe à turbine (10) et on mesure la fréquence de rotation f et l'accélération angulaire df/dt de l'arbre (17) à cet instant, et **en ce que** l'on choisit la valeur du moment d'inertie $\theta$ de l'arbre (17) de telle façon que la puissance cinétique $P_{cin}$ calculée par l'équation $P_{cin} = 4\pi^2 \cdot \theta \cdot f \cdot (df/dt)$ soit égale à la puissance électrique $P_G$ à l'instant de la séparation.

6. Dispositif pour la mise en oeuvre du procédé de régulation de la puissance d'un groupe à turbine (10) convertissant une puissance thermique en une puissance électrique, groupe à turbine (10) qui comprend, sur un arbre commun (17), une turbine (11) entraînée par la puissance thermique et un générateur (16) entraîné par la turbine (11) et fournissant une puissance électrique $P_G$ à un réseau (18), ainsi qu'un régulateur de puissance (20) en vue de la régulation de la puissance thermique $P_T$ pour la turbine (11), **caractérisé par** des premiers moyens (19), qui comparent une puissance de sortie du groupe à turbine (10) avec une valeur de puissance prédéterminée $P_C$ et transmettent une valeur différentielle $\Delta P$ comme signal de commande au régulateur de puissance (20) en vue de la régulation de la puissance thermique $P_T$ pour la turbine (11), des deuxièmes moyens (25, 25') pour la mesure de la fréquence de rotation f de l'arbre (17), des troisièmes moyens (26, ..., 29), qui déterminent la puissance cinétique $P_{cin}$ de l'arbre (17) à partir de la fréquence de rotation mesurée f et de la variation temporelle df/dt de la fréquence de rotation f selon l'équation $P_{cin} = 4\pi^2 \cdot \theta \cdot f \cdot (df/dt)$ (dans laquelle $\theta$ symbolise le moment d'inertie de la masse en rotation (17)), et des quatrièmes moyens (30), qui additionnent la puissance électrique $P_G$ fournie par le générateur (16) et la puissance cinétique $P_{cin}$ déterminée par les troisièmes moyens (26, ..., 29), et la transmettent comme puissance de sortie du groupe à turbine (10) aux premiers moyens (19).

7. Dispositif suivant la revendication 6, **caractérisé en ce que** les troisièmes moyens comprennent un module de différentiation (27), un module de multiplication (28) et un amplificateur (29) avec un facteur d'amplification réglable.

8. Dispositif suivant la revendication 6 ou 7, **caractérisé en ce que** les premiers moyens comprennent un module de soustraction (19), les deuxièmes moyens un capteur de fréquence de rotation (25, 25') et les quatrièmes moyens un module d'addition (30).

FIG. 1

EP 0 903 469 B1

FIG. 2

EP 0 903 469 B1